(19) Europäisches Patentamt / European Patent Office / Office européen des brevets

(11) **EP 2 670 207 B1**

(12) **EUROPEAN PATENT SPECIFICATION**

(45) Date of publication and mention
of the grant of the patent:
**06.05.2015 Bulletin 2015/19**

(51) Int Cl.:
*H04W 84/18* *(2009.01)*    *H04W 80/02* *(2009.01)*

(21) Application number: **13275120.7**

(22) Date of filing: **20.05.2013**

(54) **PAN ID conflict resolution method and PAN coordinator**

PAN-ID-Konfliktauflösungsverfahren und PAN-Koordinator

Procédé de résolution de conflit d'ID PAN et coordinateur PAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2012 KR 20120055946**

(43) Date of publication of application:
**04.12.2013 Bulletin 2013/49**

(73) Proprietor: **Samsung Electro-Mechanics Co., Ltd.
Gyeonggi-do (KR)**

(72) Inventor: **Yoon,, Dae Gil
443-743 Gyeonggi-do (KR)**

(74) Representative: **Potter Clarkson LLP
The Belgrave Centre
Talbot Street
Nottingham, NG1 5GG (GB)**

(56) References cited:
**EP-A1- 1 528 717    US-A1- 2007 140 194**

• SINEM COLERI ERGEN: "ZigBee/IEEE 802.15.4
Summary", INTERNET CITATION, 10 September
2004 (2004-09-10), pages 1-37, XP002674747,
Retrieved from the Internet: URL:http:
//www.prism.uvsq.fr/~mogue/SENSOR S/
Sensor%20%20Net/MAC%20pro/zigbee_802.15.
4.pdf [retrieved on 2012-12-24]

**Description**

BACKGROUND OF THE INVENTION

1. Technical Field

The present invention relates to a PAN ID conflict resolution method and a PAN coordinator. In detail, the present invention relates to a new PAN ID conflict resolution method different from a method for forming a PAN again according to a new PAN ID at the time of a PAN ID conflict and performing an associated process with membership devices again and a PAN coordinator performing the method.

2. Description of the Related Art

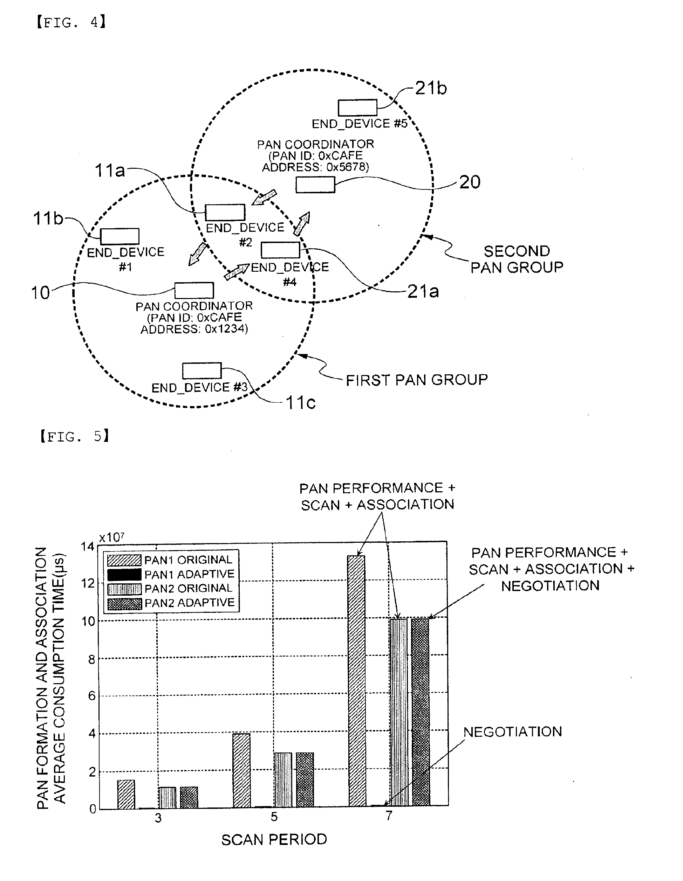

As shown in FIG. 4, a PAN ID conflict occurs when more than two PAN coordinators having the same PAN ID and different addresses are present. In this case, an end_device recognizes the PAN ID conflict and transmits a PAN ID conflict notification command to PAN coordinators of a PAN group belonging thereto.

Generally, when the PAN ID conflict among functions of the devices operated with the IEEE 802.15.4 MAC occurs, the PAN coordinators perform a process of resetting the PAN again so as to set the PAN and then, forming the PAN again.

In this case, the PAN coordinators receiving the PAN ID conflict notification command transmit an ACK signal to the end_device transmitting the PAN ID conflict notification command when the notification is valid, that is, when it is determined that the conflict occurs.

In addition, the end_device performs a process of searching new PANs rather than the existing PAN and performing association with an optimal PAN among the searched PANs.

In this process, the PAN coordinators form the PAN again and the end_device searches the PAN and does not perform communications until association with an appropriate PAN is finished. However, when communications are not made in situations in which very urgent or important data are transmitted, for example, in applications detecting time critical or hazard situations, installed systems may be useless.

[Prior Art Document]

[Patent Document]

(Patent Document 1) Korean Patent Laid-Open Publication No. 10-2007-0064227 (laid-open published on June 20, 2007)

(Patent Document 2) Japanese Patent Publication P2009-535964 (published on October 1, 2009)

EP 1 528 717 A1 discloses a broadcast method in a wireless personal area network (WPAN) which enables stable reception of broadcast content at IEEE 802.15.4, ZigBee, devices linked to a WPAN, and a communication system using the same method.

Sinem Coleri Ergen: "ZigBee/IEEE 802.15.4 Summary" published on 10 September 2004 describes the ZigBee alliance and explains the physical, medium access and routing layers of ZigBee.

US 2007/140194 A1 discloses a method of detecting and solving a network ID conflict comprising generating and transmitting a personal area network identifier report (PAN ID) command frame that includes an extended PAN ID, and receiving a PAN ID update command frame in response to the transmitted PAN ID report command frame. Thus a network ID conflict can be detected and a new PAN ID is provided to solve the network ID conflict.

SUMMARY OF THE INVENTION

An object of the present invention is to provide a new PAN ID conflict resolution method different from a method for forming a PAN according to a new PAN ID again at the time of a PAN ID conflict and performing an associated process with membership devices again according to the related art.

Another object of the present invention is to provide a technology of exchanging PAN ID renewal negotiation information between PAN coordinators in which a conflict occurs to determine by which PAN coordinator a PAN ID is effectively changed and performing a PAN ID realignment only within a PAN group to be changed.

According to an exemplary embodiment of the present invention, there is provided a PAN ID conflict resolution method, including: receiving, in a first PAN coordinator of a PAN group to which a device detecting a PAN ID conflict belongs, PAN ID conflict notification from the device; changing the PAN ID using the first PAN coordinator (10), characterised in that the first PAN coordinator transmits PAN ID renewal negotiation information to a second PAN coordinator (20) of another PAN group in which a conflict occurs, and receives the PAN ID renewal negotiation information of the corresponding group from the second PAN coordinator; the first PAN coordinator determines whether its own PAN ID is changed so as to resolve the conflict by comparing transmitted information with received information; and when it is determined that the PAN ID is changed the first PAN coordinator notifies a membership device of its own PAN group of realignment to the PAN ID, and when it is determined that the PAN ID is not changed the first PAN coordinator maintains the existing PAN ID.

The PAN ID renewal negotiation information may include at least one of the number of membership devices of its own PAN group, a hopping depth between an end membership device and a PAN coordinator, and the number of battery powered devices operated with a battery.

It may be determined whether a PAN ID is changed by comparing the number of membership devices of its own PAN group with the number of membership devices of another PAN group.

It may be determined whether the PAN ID is changed by additionally comparing the hopping depth of its own PAN group with the hopping depth of another PAN group.

It may be determined whether the PAN ID is changed by additionally comparing the number of battery powered devices of its own PAN group with the number of battery powered devices of another PAN group.

It may be determined whether the PAN ID is changed by calculating payoff values according to a game theory using, as parameters, information included in the exchanged PAN ID renewal negation information.

In determining whether the PAN ID is changed, the PAN ID change group may be selected by selecting a strategy in which the payoff value calculated according to PAN ID maintenance and change strategy for each PAN group is maximal according to a strategic game; and the payoff value may be calculated in consideration of the number of PAN groups changing the PAN ID, the number of membership devices, the maximum hopping depth, and the number of battery powered devices.

The PAN ID conflict resolution method may further include: changing, in the membership device receiving the realignment notification, the PAN ID according to the received information.

According to another exemplary embodiment of the present invention, there is provided a PAN coordinator, including: a communication unit configured to receive PAN ID conflict notification from a membership device detecting a PAN ID conflict, transmit PAN ID realignment notification to the membership devices according to a control, and transmit and receive PAN ID renewal negotiation information to and from a PAN coordinator of another PAN group in which a PAN ID conflict occurs; a conflict resolution unit configured to notify the membership devices of realignment change of the PAN ID through the communication unit according to the PAN ID change determination, characterised in that the PAN coordinator comprises a memory unit configured to store data recorded in the PAN ID renewal negotiation information, and a conflict resolution algorithm; a negotiation information generation unit configured to generate the PAN ID renewal negotiation information to be transmitted from the data stored in the memory unit through the communication unit; wherein the conflict resolution unit configured to determine whether the PAN ID is changed by comparing the PAN ID renewal negotiation information of another PAN group received through the communication unit with the PAN ID renewal negotiation information generated from the negotiation information generation unit according to the conflict resolution algorithm stored in the memory.

The PAN ID renewal negotiation information may include at least one of the number of membership devices, a hopping depth between an end membership device and a PAN coordinator, and the number of battery powered devices operated with a battery.

The conflict resolution unit may determine whether the PAN ID is changed by permitting any one of the comparisons of the number of membership devices of its own PAN group with the number of membership devices of another PAN group, the hopping depth of its own PAN group with the hopping depth of another PAN group, and the number of battery powered devices of its own PAN group with the number of battery powered devices of another PAN group.

The conflict resolution unit may determine whether the PAN ID is changed by permitting calculating and comparing payoff values according to the game theory using, as parameters, data included in the PAN ID renewal negotiation information according to the PAN ID maintenance and change strategy for each PAN group.

The payoff values may be calculated by considering the number of PAN group changing the PAN ID, the number of membership devices, the maximum hopping depth, and the number of battery powered devices.

BRIEF DESCRIPTION OF THE DRAWINGS

FIG. 1 is a flow chart schematically showing a PAN ID conflict resolution method according to an embodiment of the present invention.

FIG. 2 is a diagram schematically showing a PAN renewal negotiation information frame that is applied to the PAN ID conflict resolution method according to an embodiment of the present invention.

FIG. 3 is a flow chart schematically showing a PAN ID conflict resolution algorithm that is applied to the PAN ID conflict resolution method according to an embodiment of the present invention.

FIG. 4 is a diagram schematically showing a PAN ID conflict state.

FIG. 5 is a graph showing an improvement effect according to the PAN ID conflict resolution method according to an embodiment of the present invention.

FIG. 6 is a diagram schematically showing PAN coordinators according to another exemplary embodiment of the present invention.

## DESCRIPTION OF THE PREFERRED EMBODIMENTS

Exemplary embodiments of the present invention for accomplishing the above-mentioned objects will be described with reference to the accompanying drawings. In describing exemplary embodiments of the present invention, the same reference numerals will be used to describe the same components and an additional description that is overlapped or allow the meaning of the present invention to be restrictively interpreted will be omitted.

In the specification, it will be understood that unless a term such as 'directly' is not used in a connection, coupling, or disposition relationship between one component and another component, one component may be 'directly connected to', 'directly coupled to' or 'directly disposed to' another element or be connected to, coupled to, or disposed to another element, having the other element intervening therebetween.

Although a singular form is used in the present description, it may include a plural form as long as it is not opposite to the concept of the present invention, is not contradictory in view of interpretation or is not used in a clearly different meaning. It should be understood that "include", "have", "comprise", "be configured to include", and the like, used in the present description do not exclude presence or addition of one or more other characteristic, component, or a combination thereof.

First, a PAN ID conflict resolution method according to a first exemplary embodiment of the present invention will be described in detail with reference to the accompanying drawings. In this case, reference numerals that are not shown in the accompanying drawings may be reference numerals in other drawings showing the same configuration.

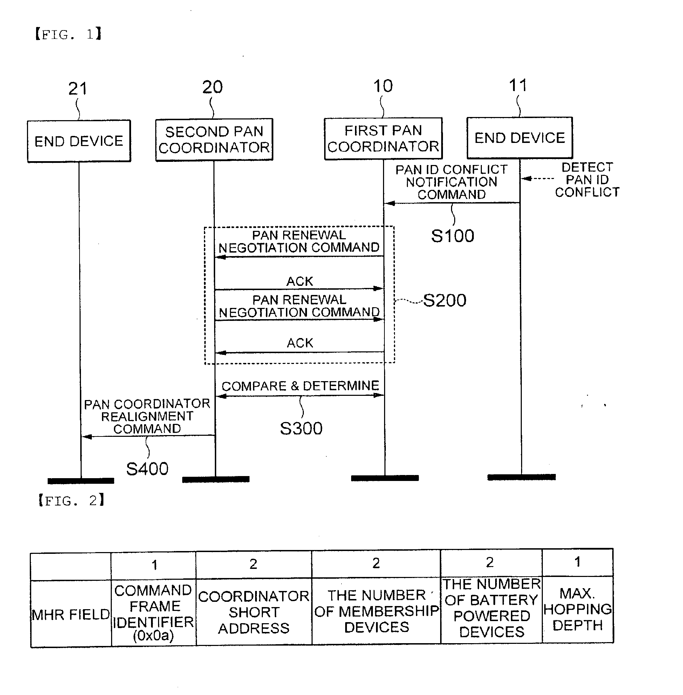

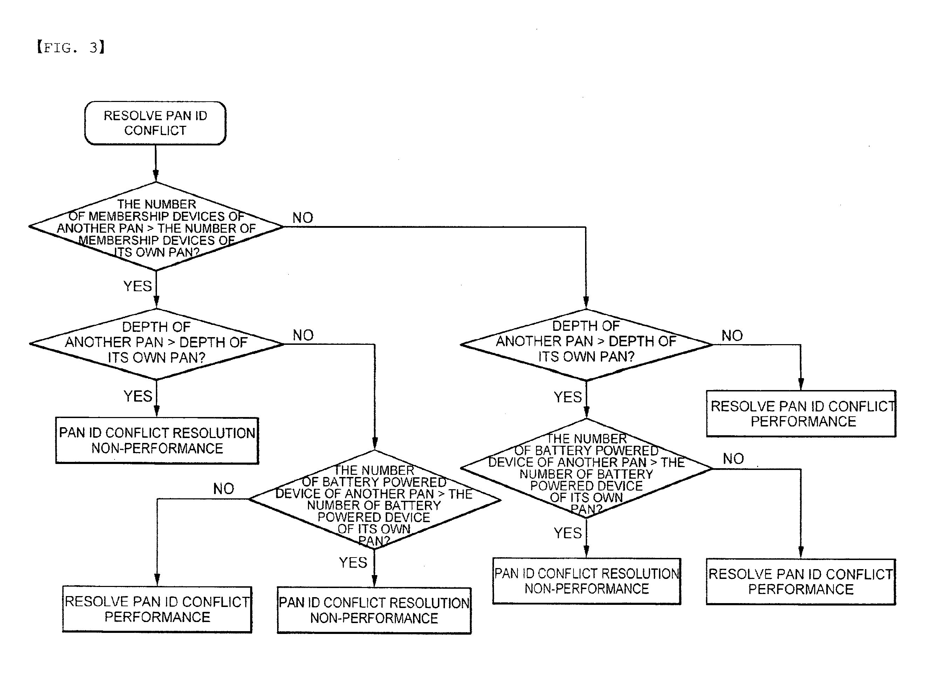

FIG. 1 is a flow chart schematically showing a PAN ID conflict resolution method according to an embodiment of the present invention, FIG. 2 is a diagram schematically showing a PAN renewal negotiation information frame that is applied to the PAN ID conflict resolution method according to an embodiment of the present invention, and FIG. 3 is a flow chart schematically showing a PAN ID conflict resolution algorithm that is applied to the PAN ID conflict resolution method according to an embodiment of the present invention. FIG. 4 is a diagram schematically showing a PAN ID conflict state and FIG. 5 is a graph showing an improvement effect according to the PAN ID conflict resolution method according to an embodiment of the present invention.

Referring to FIG. 1, a PAN ID conflict resolution method according to an example is configured to include receiving conflict notification (S100), exchanging information (S200), determining a change or not (S300), and notifying realignment (S400). Although not shown, according to an example, changing a PAN ID after the notifying of the realignment (S400) may be further provided.

The exemplary embodiment of the present invention will be described in detail with reference to FIG. 1. In FIG. 1 (S100), a first PAN coordinator 10 of a PAN group, to which an end_device 11 detecting a PAN ID conflict belongs, receives PAN ID conflict notification from the device 11.

Referring to FIGS. 1 and 4, an end_device 11 detects the PAN ID conflict and notifies the PAN ID conflict to the first PAN coordinator 10 of the PAN group belonging thereto. In this case, unlike the related art, the first PAN coordinator 10 receives the PAN ID conflict notification command from the end_device 11 that is a membership device, the first PAN coordinator 10 does not transmit an ACK signal to the end_device 11. According to the IEEE 802.15.4 Std, in the PAN ID conflict notification command, an ACK required subfield is enabled, but is changed into a disable state in the exemplary embodiment of the present invention.

Next in FIG. 1, in the step of exchanging of information (S200), the first PAN coordinator 10 exchanges the PAN ID renewal negotiation information with a second PAN coordinator 20 of another PAN group in which the conflict occurs. In FIG. 1 after receiving the PAN ID conflict notification from the membership end_device 11, the PAN coordinators 10 and 20, in which the PAN ID conflict occurs, exchange the PAN renewal negotiation command. The PAN renewal negotiation command includes data that may efficiently determine by which PAN group the PAN ID is renewed.

In this case, referring to FIG. 2, in an example, the PAN ID renewal negotiation information may include at least one of the number of membership devices of its own PAN group, a hopping depth of the end membership device and the PAN coordinator, and the number of battery powered devices operated with a battery. The hopping depth of the end membership device and the PAN coordinator may be understood as the number of hopping steps between the PAN coordinator and the end_device.

For example, referring to FIG. 2, the PAN ID renewal negotiation information may include at least one of the numbers of membership devices of the PAN group, a hopping depth of the end membership device and the PAN coordinator, and the number of battery powered devices operated with a battery.

FIG. 2 shows a PAN ID renewal negotiation command frame. Reviewing a detailed field of the PAN ID renewal negotiation command frame, the detailed field includes MHR fields and payload fields. In this case, the payload fields include information on a command frame identifier, a coordinator short address, the number of associated devices, the number of battery powered devices, and a maximum depth. The MHR fields include a frame control field, a sequence number field, an addressing field, and the like, wherein the addressing field includes a destination PAN identifier mode subfield, a destination addressing mode subfield, and a source addressing mode subfield. In this case the source addressing mode subfield uses a 64-bit, that is 8-byte, extended address and the destination addressing mode subfield is transmitted to all the devices in a broadcast type and therefore, is used by setting a short address to a 16-bit, that is a 2-byte, value for example, O x FFFF. The coordinator short address includes the short address of the PAN coordinator. The source address of the MHR fields of the frame of FIG. 2 is 8 bytes and therefore, for example, a 2-byte address is provided to the payload field as the coordinator short address, which may help to avoid overlapping when forming the PAN again and then, generating the source address of the PAN coordinator. The number of associated devices is the number of devices associated with the PAN coordinator and the number of battery powered devices is the number of devices operated with a battery among the devices associated with the PAN coordinator. In this case, the number of battery powered devices may include the PAN coordinator. A max. depth represents the number of hoppings between the end_device and the PAN coordinator.

Next, in determining whether the PAN ID is changed [FIG. 1 (S300)], the first and second PAN coordinators 10 and 20 each compare exchanged information to determine whether to change their own PAN IDs so as to resolve a conflict. In determining whether the PAN ID is changed, for example, the PAN in which the PAN realignment is made is determined by a conflict resolution algorithm as shown in FIG. 3.

Therefore, according to the exemplary embodiments of the present invention, it is possible to resolve the communication disconnection problem occurring at the time of performing the PAN ID conflict resolution while resolving the PAN ID conflict problem by rapidly performing the PAN ID conflict resolution, when the PAN ID conflict problem occurs.

A detailed example will now be described with reference to FIG. 3. FIG. 3 shows an algorithm that determines by which PAN the PAN ID conflict resolution is performed after exchanging the PAN renewal negotiation command.

According to the example, in determining whether the PAN ID is changed [FIG. 1 (S300)], it may be determined whether the PAN ID is changed by comparing the number of membership devices of its own PAN group membership devices with the number of membership devices of another PAN group. In the PAN group in which the number of membership devices is small, the PAN ID may be changed. For example, it may be applied to the case of one hop communication in which a network layer is not present.

In addition, according to the example, in determining whether the PAN ID is changed [FIG. 1(S300)], it may be determined whether the PAN ID is changed by additionally comparing the number of membership devices of its own PAN group with the number of membership devices of another PAN group together with comparing the hopping depth of its own PAN group with the hopping depth of another PAN group. In this case, the PAN ID may be changed in the PAN group in which the number of membership devices is small and the number of hoppings of the PAN is small.

Referring to FIG. 3 in more detail, in the example, in determining whether the PAN ID is changed [FIG. 1 (S300)], it may be determined whether the PAN ID is changed by comprehensively comparing the number of membership devices of its own PAN group with the number of membership devices of another PAN group, the hopping depth of its own PAN group with the hopping depth of another PAN group, and the number of battery powered devices of its own PAN group with the number of battery powered devices of another PAN group. In order to form the PAN again, the end_device needs to perform a scan and associated processes. In this case, behaviors of TX and RX are performed. In this case, the power consumption is an order of RX > TX > idle and therefore, there is a need to perform the determination by comprehensively comparing the number of battery powered devices so as to prevent a network from being broken due to the battery consumption.

In FIG. 3, the algorithm starts by comparing the associated device of its own PAN, that is, the number of membership devices with that of another PAN. Hereinafter, the results vary according to whether the hopping depth of the PAN and the battery as a power supply is used or not. When the result is the PAN ID conflict resolution execution, as shown in FIG. 1, the PAN coordinator realignment command is transmitted to the end_devices in a broadcast type. Otherwise, the PAN is maintained using the existing PAN ID.

In addition, although not shown, other examples will be described. According to such an example, it may be determined whether the PAN ID is changed by calculating payoff values using, as parameters, information included in the PAN ID renewal negotiation information exchanged according to a game theory. In this case, as the game theory, a strategic game may be applied. Each PAN coordinator simultaneously takes behaviors and the payoff value varies according to the behavior results of each PAN coordinator. In this case, when the payoff value is large, the PAN ID may be changed more efficiently.

This will be described in more detail. According to one example, in determining whether the PAN ID is changed (S300), the strategy in which the payoff value calculated according to the PAN ID maintain and change strategies for each PAN group is maximal is selected according to the strategic game, thereby selecting the PAN ID change group. It is possible to select the strategy in which the payoff value is maximal by summing the payoff values for each PAN group. In this case, the payoff value can be calculated by establishing an appropriate calculation in consideration of the number of PAN group changing the PAN ID, the number of membership devices, the maximum hopping depth, and the number of battery powered devices.

For example, in the case in which the payoff value is viewed with the viewpoint of loss rather than with the viewpoint of maintainance at the time of changing the PAN IDs for each PAN group, the groups to be changed may be compared with each other by summing the payoff values for each group so that the payoff values show a positive value according to the increase in the number of membership devices, the max. hopping depth, and the number of battery powered devices. Alternatively, when, for example, two groups are present and the PAN ID change group is one, the calculating formula may be established so that the payoff values show a positive value and when both of the two groups are changed, the calculating formula may be established so that the payoff values show a negative value.

When two groups conflict with each other, for example, the payoff value may be calculated according to the following Equation (1). In this case, the following Equation (1) is only one such example and in the real conditions, the calculating formula having appropriate parameters may be appropriately established in a trial and error manner.

$$\text{Payoff Value} = (-1)^{n+1} \cdot K(2^{Max.Depth} - 1) + N_B \times \Phi \qquad \text{(Equation 1)}$$

In Equation (1), 'n' represents the number of PAN groups changing the PAN ID, 'K' represents the number of membership devices, 'Max. Depth' represents the number of hoppings representing the hopping depth, 'NB' represents the number of battery powered devices, and $\Phi$ represents the power consumption value. That is, when only one group changes the PAN ID, the payoff value may show the positive value and when both of the two groups change the PAN ID, the payoff value may show the negative value.

The following [Table 1] shows a matrix of the strategic game used when the PAN coordinator performs the PAN ID conflict resolution. [Table 1] shows the payoff values calculated by the above Equation (1) by way of example. In this case, as shown in FIG. 4, it is assumed that the number of end_devices 11a, 11b, and 11c associated with PAN1 that is the first PAN coordinator 10 is three and the number of end_devices 21a and 21b associated with PAN2 that is the second PAN coordinator 20 is two. Further, the strategy in which both of the PAN1 and the PAN2 are maintained is excluded from the selection since the conflict occurs currently and it is assumed that 'Max. Depth' that is the number of max. hoppings is 1 and the number of battery powered devices is 0. In addition, when one of the two groups changes the PAN ID, [Table 1] shows the case in which a gain is generated. In this case, the gain is set to be 1/2 of the payoff value calculated according to the above Equation (1). The above Equation (1) and each condition for obtaining the values of [Table 1] is only one example and under real conditions, the calculating formula having appropriate parameters may be appropriately established in a trial and error manner and thus, the strategic game may be applied. Each PAN coordinator 10 and 20 simultaneously takes behaviors and the compensation varies according to the results of the behaviors of each PAN coordinator 10 and 20. In this case, when the payoff value calculated according to the above Equation (1) is set as the compensation, for example, when the PAN1 maintains the PAN ID and the PAN2 changes the PAN ID, the compensation of the PAN1 is set to be 3 and the compensation of the PAN2 is set to be 1. When the PAN1 changes the PAN ID and the PAN2 changes the PAN ID, the compensation of the PAN1 is set to be -3 and the compensation of the PAN2 is set to be -2. That is, when both of the two PANs are changed, the compensation value is set to be a negative value.

[Table 1]

|  | Strategy A (Maintainance) of PAN 2 | Strategy A (Change) of PAN 2 |
|---|---|---|
| Strategy A (Maintainance) of PAN 1 |  | 3, 1 |
| Strategy A (Change) of PAN 1 | 1.5, 2 | -3, -2 |

Next, referring again to FIG. 1, in notifying of the realignment (S400), any one PAN coordinator changing the PAN ID according to the determination when determining whether the PAN ID is changed (S300) notifies the membership device of its own PAN group of the realignment change of the PAN ID.

The PAN coordinator determined to change the PAN ID by a comparison process is changed in FIG. 1, for example, when the second PAN coordinator 20 of FIG. 1 transmits a PAN coordinator realignment command to all of the end_devices 21 associated with its own PAN in a broadcast type.

Although not shown, in one example, the PAN ID conflict resolution method may further include changing, in the membership device receiving the realignment notification, the PAN ID that changes the PAN ID according to the received information. In the changing of the PAN ID, for example, the end_devices 21 receiving the PAN coordinator realignment command of FIG. 1 changes its own PAN information with information carried on a payload of the PAN coordinator realignment command.

The improvement effect according to the exemplary embodiment of the present invention will be described with reference to FIGS. 4 and 5.

FIG. 4 shows a topology in which the PAN ID conflict occurs. In the first PAN coordinator 10 of the first PAN group, the address is $0 \times 1234$, the PAN ID is $0 \times$ CAFE, and the number of associated devices, that is, membership devices 11a, 11b, and 11c is three and in the second PAN coordinator 20 of the second PAN group, the address $0 \times 5678$, the PAN ID is $0 \times$ CAFE, and the number of associated devices 21a and 21b is two. The PAN IDs of the first and second PAN coordinators 10 and 20 are the same and thus, the PAN ID conflict occurs.

FIG. 5 shows results obtained by performing the PAN ID conflict algorithm in the PAN ID conflict resolution method according to an exemplary embodiment of the present invention. In FIG. 5, a PAN1 original and a PAN2 original show the PAN coordinator that performs the PAN ID conflict resolution according to the IEEE 802.15.4 Std., PAN1 adaptation and PAN2 adaptation show the PAN coordinator determining the PAN ID change or not by comprehensively comparing the number of membership devices of its own PAN group with the number of membership devices of another PAN group, the hopping depth of its own PAN group with the hopping depth of another PAN group, and the number of battery powered devices of its own PAN group with the number of battery powered devices of another PAN group according to an exemplary embodiment of the present invention.

As described in FIG. 5, the PAN1 original and the PAN2 original each performs the PAN formation and both of the new PAN ID scan and the new PAN associated process. On the other hand, the PAN1 adaptation exchanges only the PAN renewal negotiation command and performs only the negotiation process to be compared and only the PAN2 adaptation performs the PAN formation, the new PAN ID scan, and the new PAN associated process and negotiation process. In this case, as shown in FIG. 5, the negotiation process of exchanging and comparing the PAN renewal negotiation command consumes a very short time. On the other hand, the new PAN formation and the new PAN ID scan and new PAN associated process consume a relatively very long time and therefore, in the exemplary embodiment of the present invention, the communication disconnection problem occurring at the time of performing the PAN ID resolution may be resolved. In FIG. 5, it can be appreciated that a communication disable section is shorter by about 50% than the existing results.

Next, a PAN ID conflict resolution method according to an exemplary embodiment of the present invention will be described in detail. In this case, the PAN ID conflict resolution method according to a second exemplary embodiment of the present invention may refer to the PAN ID conflict resolution methods according to the foregoing first exemplary embodiment of the present invention and FIGS. 1 to 6 and therefore, the overlapping description thereof may be omitted.

Referring partially to FIG. 1, one example of the PAN ID conflict resolution method according to the second exemplary embodiment of the present invention may be configured to include receiving the conflict notification (S100), transmitting and receiving the information (S200), determining whether the PAN ID is changed (S300), and changing or maintaining the PAN ID.

In the receiving of the conflict notification of FIG. 1 (S100), a first PAN coordinator 10 of a PAN group to which a device 11 detecting a PAN ID conflict belongs receives PAN ID conflict notification from the device 11. In this case, unlike the related art, the PAN coordinator 10 receives the PAN ID conflict notification command from the end_device 11 that is a membership device, the PAN coordinator 10 does not transmit an ACK signal to the end_device 11.

In the transmitting and receiving of the information of FIG. 1 (S200), the first PAN coordinator 10 transmits the PAN ID renewal negotiation information to the second PAN coordinator 20 of another PAN group in which the conflict occurs and receives the PAN ID renewal negotiation information of another group from the second PAN coordinator 20. The PAN coordinators exchange the PAN renewal negotiation command, wherein the PAN renewal negotiation command includes data that can determine by which PAN group the PAN ID is effectively renewal. More detailed description refers to the foregoing first exemplary embodiment.

In this case, in an example, the PAN ID renewal negotiation information may include at least one of the number of membership devices of its own PAN group, a hopping depth of the end membership device and the PAN coordinator, and the number of battery powered devices operated with a battery. In this case, the number of battery powered devices may include the PAN coordinator.

For example, referring to FIG. 2, the PAN ID renewal negotiation information may include at least one of the number of membership devices of its own PAN group, a hopping depth of the end membership device and the PAN coordinator, and the number of battery powered devices operated with a battery.

Next, in the determining whether the PAN ID is changed of FIG. 1 (S300), the first PAN coordinator 10 compares the transmitted information with the received information and determines whether to change its own PAN ID so as to resolve a conflict. Therefore, according to the exemplary embodiments of the present invention, it is possible to resolve the communication disconnection problem occurring at the time of performing the PAN ID conflict resolution while resolving the PAN ID conflict problem by rapidly performing the PAN ID conflict resolution, when the PAN ID conflict problem occurs.

In more detail, in this case, in one example, in the determining whether the PAN ID is changed (S300), it may be determined whether the PAN ID is changed by any one of the comparison of the number of membership devices of its own PAN group with the number of membership devices of another PAN group, the comparison of the hopping depth of its own PAN group with the hopping depth of another PAN group, and the comparison of the number of battery powered devices of its own PAN group with the number of battery powered devices of another PAN group.

For example, referring to FIG. 3, in an example, it may be determined whether the change in the PAN ID is performed by comprehensively comparing the number of membership devices of its own PAN group with the number of membership devices of another PAN group, the hopping depth of its own PAN group with the hopping depth of another PAN group, and the number of battery powered devices of its own PAN group with the number of battery powered devices of another PAN group.

In addition, according to another example, in the determining whether the PAN ID is changed (S300), it may be determined whether the PAN ID is changed by calculating and comparing the payoff values using, as the parameters, the information included in the transmitted and received PAN ID renewal negotiation information according to the PAN ID maintenance and change strategy for each PAN group. In this case, each PAN coordinator simultaneously takes behaviors and the payoff value varies according to the behavior results of each PAN coordinator. In this case, when the payoff value is large, the PAN ID may be changed more efficiently. It is possible to select the strategy in which the payoff value is maximal by summing the payoff values for each PAN group.

Reviewing in more detail, in this case, in one example, in the determining whether the PAN ID is changed (S300), the payoff value can be calculated by establishing an appropriate calculating Equation in consideration of the number of PAN group changing the PAN ID, the number of membership devices, the maximum hopping depth, and the number of battery powered devices.

For example, the payoff values may be calculated from the foregoing Equation (1). In this case, the foregoing Equation (1) is only one example and in the real conditions, the calculating Equation having appropriate parameters may be appropriately established in a trial and error manner.

Next, in the changing or maintaining of the PAN ID change (see S400 of FIG. 1), when the first PAN coordinator 10 determines the PAN ID change, the first PAN coordinator 10 notifies the membership device of its own PAN group of the realignment change of the PAN ID to change the PAN ID. FIG. 1 shows that the second PAN coordinator 20 transmits the PAN coordinator realignment command to the membership association device, that is, the end_devices 21 in a broadcast type, but it is possible for the first PAN coordinator 10 to transmit the PAN coordinator realignment command to the membership devices 11 in a broadcast type according to the comparison results in determining whether the PAN ID is changed (S300) of FIG. 1.

In addition, when the first PAN coordinator 10 determines the non-change of the PAN ID, the first PAN coordinator 10 maintains the existing PAN ID.

Next, a PAN coordinator according to an exemplary embodiment of the present invention will be described in detail. In this case, the PAN ID conflict resolution method used by the PAN coordinator may refer to the PAN ID conflict resolution methods according to the foregoing examples of the present invention and FIGS. 1 to 5. Therefore the overlapping description thereof may be omitted.

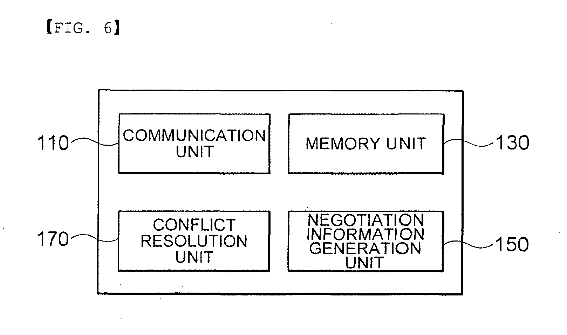

FIG. 6 is a diagram schematically showing PAN coordinators according to an exemplary embodiment of the present invention.

Referring to FIG. 6, the PAN coordinator according to one example may be configured to include a communication unit 110, a memory unit 130, a negotiation information generation unit 150, and a conflict resolution unit 170.

The communication unit 110 of FIG. 6 receives the PAN ID conflict notification from the membership device (see reference numeral 11 of FIG. 1) detecting the PAN ID conflict. Unlike the related art, when the PAN coordinator receives the PAN ID conflict notification command from the end_device that is a membership device, the PAN coordinator 10 does not transmit the ACK signal to the end_device 11.

In addition, the communication unit 110 transmits the PAN ID realignment notification to the membership devices according to the control when the PAN ID change is determined. In this case, the PAN coordinator may transmit the PAN coordinator realignment command to the membership devices in a broadcast type.

In addition, the communication unit 110 transmits and receives the PAN ID renewal negotiation information to and from the PAN coordinator of another PAN group in which the PAN ID conflict occurs. The PAN coordinators in which the PAN ID conflict occurs exchange the PAN renewal negotiation command to transmit and receive the PAN ID renewal negotiation information. It may be determined whether it is efficient for its own PAN group to renew the PAN ID from the data included in the PAN renewal negotiation command.

The memory unit 130 of FIG. 6 stores the data and conflict resolution algorithm recorded in the PAN ID renewal negotiation information. In this case, the data recorded in the PAN ID renewal negotiation information may include at least one of the number of membership devices of its own PAN group, a hopping depth of the end membership device and the PAN coordinator, and the number of battery powered devices operated with a battery. In this case, the number of battery powered devices may include the PAN coordinator.

Next, the negotiation information generation unit 150 of FIG. 6 generates the PAN ID renewal negotiation information to be transmitted through the communication unit 110 from the data stored in the memory unit 130. In this case, the negotiation information generation unit 150 generates the packets like the PAN ID renewal negotiation command frame shown in FIG. 2 for example.

In this case, in an example, the PAN ID renewal negotiation information may include at least one of the number of membership devices, a hopping depth of the end membership device and the PAN coordinator, and the number of battery powered devices operated with a battery. The number of battery powered devices may include the PAN coordinator.

For example, referring to FIG. 2, the PAN ID renewal negotiation information may include at least one of the number of membership devices of its own PAN group, a hopping depth of the end membership device and the PAN coordinator, and the number of battery powered devices operated with a battery.

Next, the conflict resolution unit 170 of FIG. 6 executes the conflict resolution algorithm stored in the memory unit 130. It is determined whether the PAN ID is changed by comparing the PAN ID renewal negotiation information of another PAN group received through the communication unit 110 with the PAN ID renewal negotiation information generated from the negotiation information generation unit 150 according to the execution of the conflict resolution algorithm. Therefore, in the exemplary embodiment of the present invention, when the PAN ID conflict problem occurs, the communication disconnection problem according to the related art can be resolved by rapidly performing the PAN ID conflict resolution.

In addition, the conflict resolution unit 170 performs a control to perform the membership devices of the realignment notification to the PAN ID to be changed through the communication unit 110 according to the PAN ID change determination.

Reviewing in more detail, in this case, in one example, the conflict resolution unit 170 may determine whether the PAN ID is changed by any one of the comparisons of the number of membership devices of its own PAN group with the number of membership devices of another PAN group, the hopping depth of its own PAN group with the hopping depth of another PAN group, and the number of battery powered devices of its own PAN group with the number of battery powered devices of another PAN group.

For example, referring to FIG. 3, the conflict resolution unit 170 may determine whether the change in the PAN ID is performed by comprehensively comparing the number of membership devices of its own PAN group with the number of membership devices of another PAN group, the hopping depth of its own PAN group with the hopping depth of another PAN group, and the number of battery powered devices of its own PAN group with the number of battery powered devices of another PAN group.

In addition, in another example, the conflict resolution unit 170 may determine whether the PAN ID is changed by calculating and comparing the payoff values using, as the parameters, the data included in the PAN ID renewal negotiation information according to the PAN ID maintenance and change strategy for each PAN group. It is possible to select the strategy in which the payoff value is maximal by summing the payoff values for each PAN group.

In this case, according to another example, the payoff values can be calculated by establishing an appropriate calculating Equation in consideration of the number of PAN group changing the PAN ID, the number of membership devices, the maximum hopping depth, and the number of battery powered devices.

For example, the payoff values may be calculated from the foregoing Equation (1). In this case, the foregoing Equation (1) is only one example and in the real conditions, the calculating Equation having appropriate parameters may be appropriately established in a trial and error manner.

According to the exemplary embodiments of the present invention, it is possible to provide the new PAN ID conflict resolution method different from the method for forming the PAN according to the new PAN ID again at the time of the PAN ID conflict and performing the associated process with the membership devices again according to the related art.

In this case, it is possible to provide a technology of exchanging the PAN ID renewal negotiation information between the PAN coordinators in which a conflict occurs to determine by which PAN coordinator the PAN ID is efficiently changed and performing the PAN ID realignment only within only the PAN group to be changed.

Therefore, according to the exemplary embodiments of the present invention, it is possible to resolve the communication disconnection problem occurring at the time of performing the PAN ID conflict resolution while resolving the PAN ID conflict problem by rapidly performing the PAN ID conflict resolution, when the PAN ID conflict occurs.

It is obvious that various effects directly not stated according to various exemplary embodiment of the present invention may be derived by those skilled in the art from various configurations according to the exemplary embodiments of the present invention.

The accompanying drawings and the above-mentioned exemplary embodiments have been illustratively provided in order to assist in understanding of those skilled in the art to which the present invention pertains rather than limiting a scope of the present invention. In addition, exemplary embodiments according to a combination of the above-mentioned configurations may be obviously implemented by those skilled in the art. Therefore, various exemplary embodiments of the present invention may be implemented in modified forms without departing from an essential feature of the present invention. Thus the scope of the present invention should be interpreted according to claims.

## Claims

1.  A PAN ID conflict resolution method, comprising:

    receiving, in a first PAN coordinator (10) of a PAN group to which a device detecting a PAN ID conflict belongs, PAN ID conflict notification from the device (S100) ; and
    changing the PAN ID using the first PAN coordinator (10),
    **characterised in that**
    the first PAN coordinator (10) transmits PAN ID renewal negotiation information (S200) to a second PAN coordinator (20) of another PAN group in which a conflict occurs, and receives the PAN ID renewal negotiation information of the corresponding group from the second PAN coordinator (20);
    the first PAN coordinator (10) determines whether its own PAN ID is changed so as to resolve the conflict by comparing transmitted information with received information (S300); and
    when it is determined that the PAN ID is changed the first PAN coordinator (10) notifies a membership device of its own PAN group of realignment to the PAN ID (S400), and
    when it is determined that the PAN ID is not changed the first PAN coordinator (10) maintains the existing PAN ID.

2.  The PAN ID conflict resolution method according to Claim 1, wherein the PAN ID renewal negotiation information includes at least one of the number of membership devices of its own PAN group, a hopping depth between the deepest end membership device and the PAN coordinator itself, and the number of battery powered devices operated with a battery.

3.  The PAN ID conflict resolution method according to Claim 2, wherein it is determined whether the PAN ID is changed by comparing the number of membership devices of its own PAN group with the number of membership devices of another PAN group.

4.  The PAN ID conflict resolution method according to Claim 3, wherein it is determined whether the PAN ID is changed by additionally comparing the hopping depth of its own PAN group with the hopping depth of another PAN group.

5.  The PAN ID conflict resolution method according to Claim 4, wherein it is determined whether the PAN ID is changed by additionally comparing the number of battery powered devices of its own PAN group with the number of battery powered devices of another PAN group.

6.  The PAN ID conflict resolution method according to Claim 2, wherein it is determined whether the PAN ID is changed by calculating payoff values according to a game theory using, as parameters, information included in the exchanged PAN ID renewal negation information.

7.  The PAN ID conflict resolution method according to Claim 6, wherein in determining whether the PAN ID is changed , the PAN ID change group is selected by selecting a strategy in which the payoff value calculated according to PAN ID maintenance and change strategy for each PAN group is maximal according to a strategic game; and
    the payoff value is calculated in consideration of the number of PAN groups changing the PAN ID, the number of membership devices, the maximum hopping depth, and the number of battery powered devices.

8.  The PAN ID conflict resolution method according to Claim 1, further comprising: changing, in the membership device receiving the realignment notification, the PAN ID according to the received information.

9.  A PAN coordinator, comprising:

    a communication unit (110) configured to receive PAN ID conflict notification from a membership device detecting a PAN ID conflict, transmit PAN ID realignment notification to the membership devices according to a control, and transmit and receive PAN ID renewal negotiation information to and from a PAN coordinator of another PAN group in which the conflict occurs; and

a conflict resolution unit (170) configured to notify the membership devices of realignment change of the PAN ID through the communication unit (110) according to the PAN ID change determination,

**characterised in that** the PAN coordinator comprises

a memory unit (130) configured to store data recorded in the PAN ID renewal negotiation information, and a conflict resolution algorithm; and

a negotiation information generation unit (150) configured to generate the PAN ID renewal negotiation information to be transmitted from the data stored in the memory unit (130) through the communication unit (110),

wherein the conflict resolution unit (170) is configured to determine whether the PAN ID is changed by comparing the PAN ID renewal negotiation information of another PAN group received through the communication unit (110) with the PAN ID renewal negotiation information generated from a negotiation information generation unit (150) according to a conflict resolution algorithm stored in a memory unit (130).

10. The PAN coordinator according to Claim 9, wherein the PAN ID renewal negotiation information includes at least one of the number of membership devices, a hopping depth between the deepest end membership device and the PAN coordinator itself, and the number of battery powered devices operated with a battery.

11. The PAN coordinator according to Claim 10, wherein the conflict resolution unit (170) is adapted to perform comparison between the number of membership devices of its own PAN group with the number of membership devices of another PAN group; or the hopping depth of its own PAN group with the hopping depth of another PAN group; or the number of battery powered devices of its own PAN group with the number of battery powered devices of another PAN group.

12. The PAN coordinator according to Claim 10, wherein the conflict resolution unit (170) is adapted to calculate and compare payoff values according to the game theory using, as parameters, data included in the PAN ID renewal negotiation information according to the PAN ID maintenance and change strategy for each PAN group.

13. The PAN coordinator according to Claim 12, wherein the conflict resolution unit (170) is adapted to calculate the payoff values by considering the number of PAN group changing the PAN ID, the number of membership devices, the maximum hopping depth, and the number of battery powered devices.

**Patentansprüche**

1. PAN ID Konfliktlösungsverfahren, umfassend:

   in einem ersten PAN Koordinator (10) einer PAN Gruppe, zu dem ein Gerät gehört, das einen PAN ID Konflikt erkennt, wird eine PAN ID Konfliktmeldung von der Baugruppe (S100) empfangen; und
   die PAN ID wird mit Hilfe des ersten PAN Koordinators (10) geändert,
   **dadurch gekennzeichnet, dass**
   der erste PAN Koordinator (10) PAN ID Wechselverhandlungsinformation (S200) an einen zweiten PAN Koordinator (20) einer anderen PAN Gruppe, in der ein Konflikt auftritt, sendet und die PAN ID Wechselverhandlungsinformation der entsprechenden Gruppe von dem zweiten PAN Koordinator (20) empfängt;
   der erste PAN Koordinator (10) bestimmt, ob seine eigene PAN ID geändert wird, um so den Konflikt durch Vergleich von gesendeter Information mit empfangener Information (S300) zu lösen; und
   wenn festgestellt wird, dass die PAN ID geändert wird, meldet der erste PAN Koordinator (10) an ein Mitgliedsgerät seiner eigenen PAN Gruppe die Umordnung der PAN ID (S400) und
   wenn festgestellt wird, dass die PAN ID nicht geändert wird, behält der erste PAN Koordinator (10) die vorhandene PAN ID bei.

2. PAN ID Konfliktlösungsverfahren gemäß Anspruch 1, worin die PAN ID Wechselverhandlungsinformation mindestens eine der folgenden umfasst: die Anzahl von Mitgliedsgeräten der eigenen PAN Gruppe, eine Sprungtiefe zwischen dem weitest entfernten Mitgliedsgerät und dem PAN Koordinator selbst, und die Anzahl batteriegespeister Geräte, die mit einer Batterie betrieben werden.

3. PAN ID Konfliktlösungsverfahren gemäß Anspruch 2, worin bestimmt wird, ob die PAN ID geändert wird, durch Vergleich der Zahl von Mitgliedsgeräten in der eigenen PAN Gruppe mit der Zahl von Mitgliedsgeräten einer anderen PAN Gruppe.

4. PAN ID Konfliktlösungsverfahren gemäß Anspruch 3, worin bestimmt wird, ob die PAN ID geändert wird, durch zusätzlich einen Vergleich der Sprungtiefe der eigenen PAN Gruppe mit der Sprungtiefe einer anderen PAN Gruppe.

5. PAN ID Konfliktlösungsverfahren gemäß Anspruch 4, worin bestimmt wird, ob die PAN ID geändert wird, durch zusätzlichen Vergleich der Anzahl batteriegespeister Geräte der eigenen PAN Gruppe mit der Anzahl batteriegespeister Geräte einer anderen PAN Gruppe.

6. PAN ID Konfliktlösungsverfahren gemäß Anspruch 2, worin bestimmt wird, ob die PAN ID geändert wird, durch Berechnung von Erfolgswerten nach einer Spieltheorie unter Verwendung von Informationen als Parametern, die in der ausgetauschten PAN ID Wechselverhandlungsinformation enthalten ist.

7. PAN ID Konfliktlösungsverfahren gemäß Anspruch 6, worin bei der Feststellung, ob die PAN ID geändert wird, die PAN ID-Änderungsgruppe ausgewählt wird durch Auswählen einer Strategie, in der die im Rahmen der PAN ID Wartungs- und Änderungsstrategie berechneten Erfolgswerte für jede PAN Gruppe gemäß einem Strategiespiel maximal ist; und
der Erfolgswert berechnet wird unter Berücksichtigung der Anzahl von PAN Gruppen, die die PAN ID ändern, der Zahl von Mitgliedsgeräten, der maximalen Sprungtiefe, und der Zahl von batteriegespeisten Geräten.

8. PAN ID Konfliktlösungsverfahren gemäß Anspruch 1, weiter umfassend: Änderung der PAN ID in dem Mitgliedsgerät, das die Umordnungsmeldung empfängt, entsprechend der empfangenen Information.

9. PAN Koordinator, umfassend:

eine Kommunikationseinheit (110) eingerichtet zum Empfang von PAN ID Konfliktmeldungen von einem Mitgliedsgerät, das einen PAN ID Konflikt erkennt, Senden einer PAN ID Umordnungsmeldung an ein Mitgliedsgerät in Abhängigkeit von einer Steuerung, und Senden und Empfangen von PAN ID Wechselverhandlungsinformationen nach und von einem PAN Koordinator einer anderen PAN Gruppe, in der der Konflikt auftritt; und
eine Konfliktlösungseinheit (170) eingerichtet, um den Mitgliedsgeräten die Umordnungsänderungen der PAN ID durch die Kommunikationseinheit (110) entsprechend der PAN ID Änderungsfestlegung zu melden, **dadurch gekennzeichnet, dass** der PAN Koordinator umfasst
eine Speichereinheit (130) eingerichtet zum Speichern von Daten, die in der PAN ID Wechselverhandlungsinformation aufgezeichnet sind, und einen Konfliktlösungsalgorithmus; und
eine Verhandlungsinformations-Erzeugungseinheit (150) eingerichtet zur Erzeugung der zu sendenden PAN ID Wechselverhandlungsinformation aus den in der Speichereinheit (130) gespeicherten Daten durch die Kommunikationseinheit (110),
worin die Konfliktlösungseinheit (170) eingerichtet ist zu bestimmen, ob die PAN ID geändert wird, durch Vergleich der PAN ID Wechselverhandlungsinformation einer anderen PAN Gruppe, die durch die Kommunikationseinheit (110) empfangen wurde, mit der PAN ID Wechselverhandlungsinformationen, die von der Verhandlungsinformations-Erzeugungseinheit (150) erzeugt wurde, gemäß einem Konfliktlösungsalgorithmus, der in der Speichereinheit (130) gespeichert ist.

10. PAN Koordinator gemäß Anspruch 9, worin die PAN ID Wechselverhandlungsinformation mindestens eine der folgenden umfasst: die Anzahl von Mitgliedsgeräten, eine Sprungtiefe zwischen dem weitest entfernten Mitgliedsgerät und dem PAN Koordinator selbst, und die Anzahl batteriegespeister Geräte, die mit einer Batterie betrieben werden.

11. PAN Koordinator gemäß Anspruch 10, worin die Konfliktlösungseinheit (170) adaptiert ist, einen Vergleich zwischen der Anzahl von Mitgliedsgeräten der eigenen PAN Gruppe mit der Anzahl von Mitgliedsgeräten einer anderen PAN Gruppe; oder der Sprungtiefe der eigenen PAN Gruppe mit der Sprungtiefe einer anderen PAN Gruppe; oder der Anzahl batteriegespeister Geräte der eigenen PAN Gruppe mit der Anzahl batteriegespeister Geräte einer anderen PAN Gruppe durchzuführen.

12. PAN Koordinator gemäß Anspruch 10, worin die Konfliktlösungseinheit (170) adaptiert ist Erfolgswerte nach der Spieltheorie zu berechnen und zu vergleichen unter Verwendung von Daten als Parametern, die in der PAN ID Wechselverhandlungsinformation gemäß der PAN ID Wartungs- und Änderungsstrategie für jede PAN Gruppe enthalten sind.

13. PAN Koordinator gemäß Anspruch 12, worin die Konfliktlösungseinheit (170) adaptiert ist, die Erfolgswerte zu berechnen durch Berücksichtigung der Anzahl von PAN Gruppen, die die PAN ID ändern, der Zahl von Mitgliedsgeräten, der maximalen Sprungtiefe, und der Zahl von batteriegespeisten Geräten.

**Revendications**

1. Procédé de résolution de conflit d'ID de PAN, comprenant :

   la réception, dans un premier coordinateur de PAN (10) d'un groupe de PAN auquel un dispositif détectant un conflit d'ID de PAN appartient, d'une notification de conflit d'ID de PAN en provenance du dispositif (S100) ; et
   le changement de l'ID de PAN en utilisant le premier coordinateur de PAN (10),
   **caractérisé en ce que**
   le premier coordinateur de PAN (10) transmet des informations de négociation de renouvellement d'ID de PAN (S200) à un second coordinateur de PAN (20) d'un autre groupe de PAN dans lequel un conflit se produit, et reçoit les informations de négociation de renouvellement d'ID de PAN du groupe correspondant en provenance du second coordinateur de PAN (20) ;
   le premier coordinateur de PAN (10) détermine si son propre ID de PAN est changé de manière à résoudre le conflit en comparant des informations transmises avec des informations reçues (S300) ; et
   lorsqu'il est déterminé que l'ID de PAN est changé le premier coordinateur de PAN (10) notifie à un dispositif d'appartenance de son propre groupe de PAN le réalignement pour l'ID de PAN (S400), et
   lorsqu'il est déterminé que l'ID de PAN n'est pas changé le premier coordinateur de PAN (10) maintient l'ID de PAN existant.

2. Procédé de résolution de conflit d'ID de PAN selon la revendication 1, dans lequel les informations de négociation de renouvellement d'ID de PAN incluent au moins un parmi le nombre de dispositifs d'appartenance de son propre groupe de PAN, une profondeur de saut entre le dispositif d'appartenance d'extrémité le plus profond et le coordinateur de PAN lui-même, et le nombre de dispositifs alimentés par batterie fonctionnant avec une batterie.

3. Procédé de résolution de conflit d'ID de PAN selon la revendication 2, dans lequel il est déterminé si l'ID de PAN est changé en comparant le nombre de dispositifs d'appartenance de son propre groupe de PAN avec le nombre de dispositifs d'appartenance d'un autre groupe de PAN.

4. Procédé de résolution de conflit d'ID de PAN selon la revendication 3, dans lequel il est déterminé si l'ID de PAN est changé en comparant en outre la profondeur de saut de son propre groupe de PAN à la profondeur de saut d'un autre groupe de PAN.

5. Procédé de résolution de conflit d'ID de PAN selon la revendication 4, dans lequel il est déterminé si l'ID de PAN est changé en comparant en outre le nombre de dispositifs alimentés par batterie de son propre groupe de PAN avec le nombre de dispositifs alimentés par batterie d'un autre groupe de PAN.

6. Procédé de résolution de conflit d'ID de PAN selon la revendication 2, dans lequel il est déterminé si l'ID de PAN est changé en calculant des valeurs de gain selon une théorie des jeux en utilisant, comme paramètres, des informations incluses dans les informations de négociation de renouvellement d'ID de PAN échangées.

7. Procédé de résolution de conflit d'ID de PAN selon la revendication 6, dans lequel dans la détermination de si l'ID de PAN est changé, le groupe de changement d'ID de PAN est sélectionné en sélectionnant une stratégie dans laquelle la valeur de gain calculée en fonction d'une stratégie de maintien et de changement d'ID de PAN pour chaque groupe de PAN est maximale selon un jeu stratégique ; et
   la valeur de gain est calculée en considération du nombre de groupes de PAN changeant l'ID de PAN, du nombre de dispositifs d'appartenance, de la profondeur de saut maximum, et du nombre dispositifs alimentés par batterie.

8. Procédé de résolution de conflit d'ID de PAN selon la revendication 1, comprenant en outre : le changement, dans le dispositif d'appartenance recevant la notification de réalignement, de l'ID de PAN en fonction des informations reçues.

**9.** Coordinateur de PAN, comprenant :

une unité de communication (110) configurée pour recevoir une notification de conflit d'ID de PAN en provenance d'un dispositif d'appartenance détectant un conflit d'ID de PAN, transmettre une notification de réalignement d'ID de PAN aux dispositifs d'appartenance en fonction d'une commande, et transmettre et recevoir des informations de négociation de renouvellement d'ID de PAN à et d'un coordinateur de PAN d'un autre groupe de PAN dans lequel le conflit se produit ; et
une unité de résolution de conflit (170) configurée pour notifier aux dispositifs d'appartenance un changement de réalignement de l'ID de PAN par l'intermédiaire de l'unité de communication (110) en fonction de la détermination de changement d'ID de PAN,
**caractérisé en ce que** le coordinateur de PAN comprend
une unité de mémoire (130) configurée pour stocker des données enregistrées dans les informations de négociation de renouvellement d'ID de PAN, et un algorithme de résolution de conflit ; et
une unité de génération d'informations de négociation (150) configurée pour générer les informations de négociation de renouvellement d'ID de PAN à transmettre à partir des données stockées dans l'unité de mémoire (130) par l'intermédiaire de l'unité de communication (110),
dans lequel l'unité de résolution de conflit (170) est configurée pour déterminer si l'ID de PAN est changé en comparant les informations de négociation de renouvellement d'ID de PAN d'un autre groupe de PAN reçues par l'intermédiaire de l'unité de communication (110) avec les informations de négociation de renouvellement d'ID de PAN générées à partir d'une unité de génération d'informations de négociation (150) en fonction d'un algorithme de résolution de conflit stocké dans une unité de mémoire (130).

**10.** Coordinateur de PAN selon la revendication 9, dans lequel les informations de négociation de renouvellement d'ID de PAN incluent au moins un parmi le nombre de dispositifs d'appartenance, une profondeur de saut entre le dispositif d'appartenance d'extrémité le plus profond et le coordinateur de PAN lui-même, et le nombre de dispositifs alimentés par batterie fonctionnant avec une batterie.

**11.** Coordinateur de PAN selon la revendication 10, dans lequel l'unité de résolution de conflit (170) est adaptée pour effectuer une comparaison entre le nombre de dispositifs d'appartenance de son propre groupe de PAN et le nombre de dispositifs d'appartenance d'un autre groupe de PAN ; ou la profondeur de saut de son propre groupe de PAN et la profondeur de saut d'un autre groupe de PAN ; ou le nombre de dispositifs alimentés par batterie de son propre groupe de PAN et le nombre de dispositifs alimentés par batterie d'un autre groupe de PAN.

**12.** Coordinateur de PAN selon la revendication 10, dans lequel l'unité de résolution de conflit (170) est adaptée pour calculer et comparer des valeurs de gain selon la théorie des jeux en utilisant, comme paramètres, des données incluses dans les informations de négociation de renouvellement d'ID de PAN en fonction de la stratégie de maintien et de changement d'ID de PAN pour chaque groupe de PAN.

**13.** Coordinateur de PAN selon la revendication 12, dans lequel l'unité de résolution de conflit (170) est adaptée pour calculer les valeurs de gain en considérant le nombre de groupes de PAN changeant l'ID de PAN, le nombre de dispositifs d'appartenance, la profondeur de saut maximum, et le nombre de dispositifs alimentés par batterie.

【FIG. 1】

【FIG. 2】

| MHR FIELD | COMMAND FRAME IDENTIFIER (0x0a) | COORDINATOR SHORT ADDRESS | THE NUMBER OF MEMBERSHIP DEVICES | THE NUMBER OF BATTERY POWERED DEVICES | MAX. HOPPING DEPTH |
|---|---|---|---|---|---|
| | 1 | 2 | 2 | 2 | 1 |

[FIG. 3]

RESOLVE PAN ID CONFLICT

THE NUMBER OF MEMBERSHIP DEVICES OF ANOTHER PAN > THE NUMBER OF MEMBERSHIP DEVICES OF ITS OWN PAN?

— NO →

DEPTH OF ANOTHER PAN > DEPTH OF ITS OWN PAN?

— NO → RESOLVE PAN ID CONFLICT PERFORMANCE

YES ↓

THE NUMBER OF BATTERY POWERED DEVICE OF ANOTHER PAN > THE NUMBER OF BATTERY POWERED DEVICE OF ITS OWN PAN?

— NO → RESOLVE PAN ID CONFLICT PERFORMANCE

YES → PAN ID CONFLICT RESOLUTION NON-PERFORMANCE

YES ↓

DEPTH OF ANOTHER PAN > DEPTH OF ITS OWN PAN?

— NO →

THE NUMBER OF BATTERY POWERED DEVICE OF ANOTHER PAN > THE NUMBER OF BATTERY POWERED DEVICE OF ITS OWN PAN?

— NO → RESOLVE PAN ID CONFLICT PERFORMANCE

YES → PAN ID CONFLICT RESOLUTION NON-PERFORMANCE

YES → PAN ID CONFLICT RESOLUTION NON-PERFORMANCE

【FIG. 4】

【FIG. 5】

【FIG. 6】

| | |
|---|---|
| 110 — COMMUNICATION UNIT | MEMORY UNIT — 130 |
| 170 — CONFLICT RESOLUTION UNIT | NEGOTIATION INFORMATION GENERATION UNIT — 150 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070064227
- JP P2009535964 B
- EP 1528717 A1
- US 2007140194 A1

**Non-patent literature cited in the description**

- **SINEM COLERI ERGEN.** describes the ZigBee alliance and explains the physical, medium access and routing layers of ZigBee. *ZigBee/IEEE 802.15.4 Summary,* 10 September 2004